# EUROPEAN PATENT APPLICATION

(11) **EP 4 131 099 A1**
(43) Date of publication of application: **08.02.2023**
(21) Application number: 21776732.6
(22) Date of filing: 14.01.2021
(51) Int. Cl.: G06Q 10/08, G06Q 50/10

(54) **INFORMATION PROCESSING DEVICE, INFORMATION PROCESSING METHOD, INFORMATION PROCESSING PROGRAM, AND STORAGE MEDIUM**

(30) Priority: 27.03.2020 JP 2020058886
(71) Applicant: Pioneer Corporation, Tokyo 113-0021 (JP)
(72) Inventor: OHISHI, Tomoya, Kawagoe-shi, Saitama 350-8555 (JP); SATO, Shoko, Kawagoe-shi, Saitama 350-8555 (JP)
(74) Representative: Hoffmann Eitle
(86) International application number: PCT/JP2021/001128
(87) International publication number: WO 2021/192527

(57) **Abstract**

An information processing apparatus (3) includes: a food information acquisition unit (323) configured to acquire attribute information on food ordered by a user; a user information acquisition unit (324) configured to acquire information on movement of the user; and a determination unit (325) configured to, in accordance with the attribute information and the information on the movement, determine a location where the user receives the food.

## Description

### Field

The present invention relates to an information processing apparatus, an information processing method, an information processing program, and a storage medium. Background

In recent years, food delivery services whereby customers order food and request its delivery via the Internet have been becoming increasingly popular. Conventionally, a smart speaker with a voice assistant function that recognizes voice input from a microphone using artificial intelligence (AI) on a network and responds to the input voice is known (see, for example, Patent Literature 1). The voice assistant function is activated in response to specific words uttered by a user (hereinafter referred to as "wake words"). Using such a voice assistant function, a user on the move, for example, can order food.

### Citation List

### Patent Literature

Patent Literature 1: Japanese Patent Application Laid-open No. 2019-184809

### Summary

### Technical Problem

Unfortunately, such conventional techniques involve limitations including the incapability of taking into account the situations of users on the move and the attributes of ordered food. This incapability results in failure to properly maintain the freshness of the food that is being delivered and to enable the users on the move to efficiently receive the ordered food.

To address such limitations, the present invention is directed to providing an information processing apparatus, an information processing method, an information processing program, and a storage medium that, for example, properly maintain the freshness of food that is being delivered and enable a user on the move to efficiently receive ordered food.

### Solution to Problem

An information processing apparatus including: a food information acquisition unit configured to acquire attribute information on food ordered by a user; a user information acquisition unit configured to acquire information on movement of the user; and a determination unit configured to, in accordance with the attribute information and the information on the movement, determine a location where the food is received by the user.

An information processing method to be executed by an information processing apparatus, the information processing method including: a food information acquiring step of acquiring attribute information on food ordered by a user; a user information acquiring step of acquiring information on movement of the user; and a determining step of determining, in accordance with the attribute information and the information on the movement, a location where the user receives the food.

An information processing program to cause a computer, executes a food information acquiring step of acquiring attribute information on food ordered by a user; a user information acquiring step of acquiring information on movement of the user; and a determining step of determining, in accordance with the attribute information and the information on the movement, a location where the user receives the food.

A storage medium in which an information processing program has been stored, the information processing program causing a computer, executes a food information acquiring step of acquiring attribute information on food ordered by a user; a user information acquiring step of acquiring information on movement of the user; and a determining step of determining, in accordance with the attribute information and the information on the movement, a location where the user receives the food.

### Brief Description of Drawings

FIG. 1 is a block diagram illustrating the configuration of an information processing system according to a first embodiment.
FIG. 2 is a block diagram illustrating the configuration of an in-vehicle terminal.
FIG. 3 is a block diagram illustrating the configuration of an information processing apparatus.
FIG. 4 illustrates an example of data stored in a food information database (DB).
FIG. 5 illustrates processing for selecting a delivery point and a delivery method.
FIG. 6 is a flowchart illustrating an information processing method.
FIG. 7 illustrates the information processing method. Description of Embodiments

With reference to the drawings, the following describes embodiments for carrying out the present invention (hereinafter referred to as "embodiments"). The present invention is not limited by the embodiments described below. Furthermore, the drawings are illustrated with identical parts marked with the same signs.

### First Embodiment

### Schematic configuration of information processing system

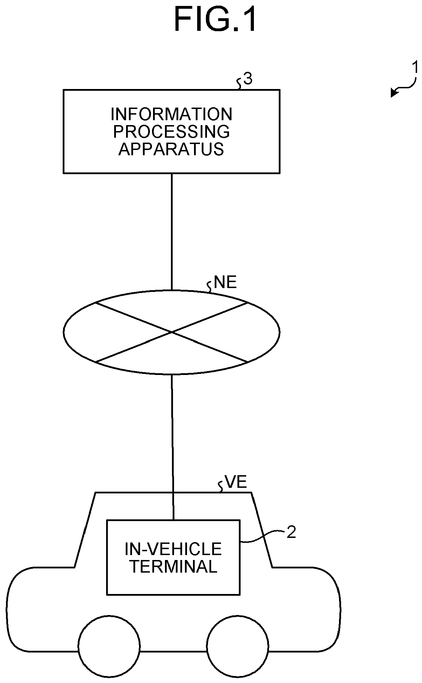

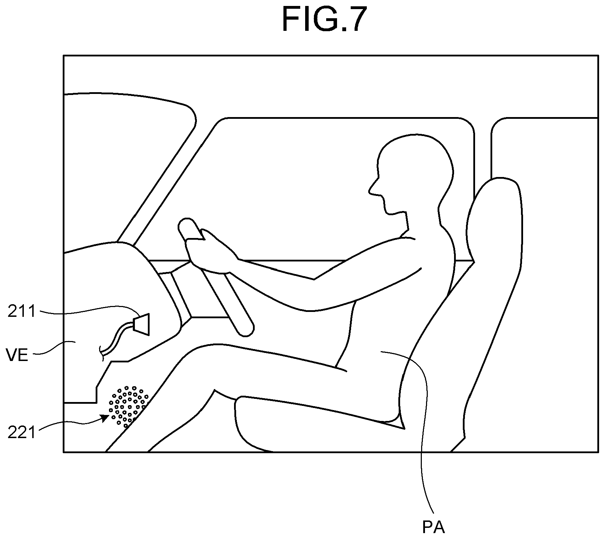

FIG. 1 is a block diagram illustrating the configuration of an information processing system 1 according to a first embodiment. The information processing system 1 is a system that executes an order of food for a passenger PA (see FIG. 7) of a vehicle VE (FIG. 1), a moving object, according to the request from the passenger PA. The passenger PA may be a driver or a fellow passenger.

As illustrated in FIG. 1, this information processing system 1 includes an in-vehicle terminal 2 and an information processing apparatus 3. The in-vehicle terminal 2 and the information processing apparatus 3 illustrated therein communicate via a network NE (FIG. 1), a wireless communication network. In the following description of the embodiment, a case where a user (the passenger) uses an automobile as means of mobility is described as an example. However, this is not a limiting example. For example, the means of mobility may be a bicycle, a motorcycle, or walking.

Although FIG. 1 illustrates an example where the single in-vehicle terminal 2, which communicates with the information processing apparatus 3, is included, a plurality of such terminals may be mounted on a plurality of different corresponding vehicles. As another example, a plurality of such in-vehicle terminals 2 may be mounted on a single vehicle so that a plurality of passengers on that single vehicle can be serviced. Furthermore, a case where the information processing apparatus 3 is a server apparatus whereby the in-vehicle terminal 2 or a terminal apparatus (not illustrated) or the like in a shop is notified of a processing result is described as an example. However, this is not a limiting example. For example, the information processing apparatus 3 may be an apparatus installed in a shop or the like that accepts orders of food.

### Configuration of in-vehicle terminal

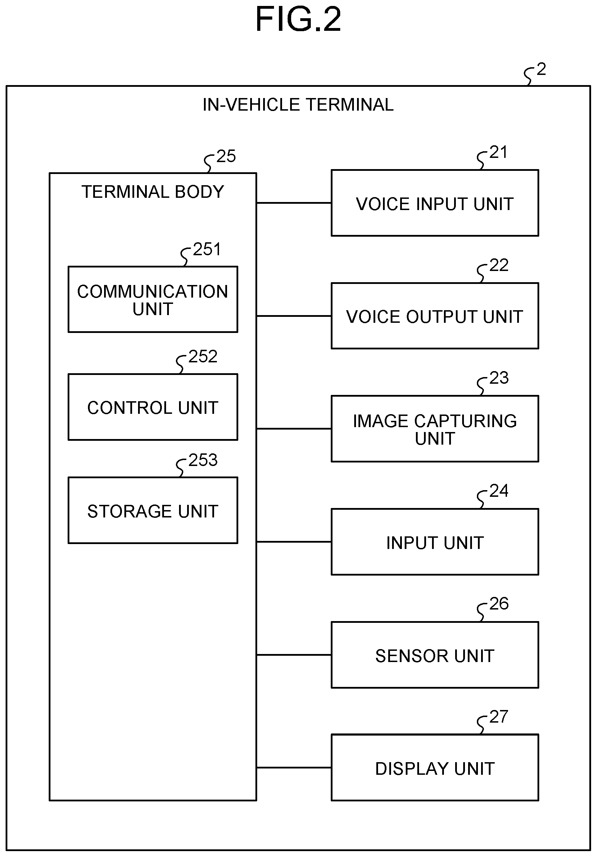

FIG. 2 is a block diagram illustrating the configuration of the in-vehicle terminal 2. The in-vehicle terminal 2 is, for example, a navigation device or a drive recorder stationarily installed in the vehicle VE. However, the in-vehicle terminal 2 is not limited to a navigation device or a drive recorder. A portable terminal, such as a smartphone used by the passenger PA of the vehicle VE, may be used instead. As illustrated in FIG. 2, this in-vehicle terminal 2 includes a voice input unit 21, a voice output unit 22, an image capturing unit 23, an input unit 24, a terminal body 25, a sensor unit 26, and a display unit 27.

Including a microphone 211 (see FIG. 7) that voice is input to and that converts the voice into electrical signals, the voice input unit 21 generates voice information by performing processing such as analog/digital (A/D) conversion on the electrical signals. In the first embodiment, the voice information generated by the voice input unit 21 is digital signals. The voice input unit 21 then outputs the voice information to the terminal body 25.

Including a speaker 221 (see FIG. 7), the voice output unit 22 converts, into analog voice signals, digital voice signals input thereto from the terminal body 25 by digital/analog (D/A) conversion and outputs voice according to the analog voice signals from the speaker 221.

The image capturing unit 23 takes an image of the passenger PA of the vehicle VE and generates a captured image under the control of the terminal body 25. The image capturing unit 23 then outputs the generated captured image to the terminal body 25.

Including an input device such as a touch panel, a keyboard, or a mouse, the input unit 24 accepts the input of various data in response to the operations of the passenger PA. To the terminal body 25, the input unit 24 then outputs the various data the input of which has been accepted thereby.

Including sensor devices such as a global positioning system (GPS) sensor, a gyro sensor, an acceleration sensor, and an azimuth sensor, the sensor unit 26 has the function of sensing information used for the processing in the terminal body 25. The GPS sensor measures information indicating the latitude, the longitude, and the altitude of a target by receiving GPS signals from GPS satellites. The information obtained by the GPS sensor is also referred to as "positional information" below.

The display unit 27 is composed of a display employing a material such as liquid crystal or organic electro luminescence (EL) and displays various images under the control of the terminal body 25.

The terminal body 25 includes a communication unit 251, a control unit 252, and a storage unit 253 as illustrated in FIG. 2. The communication unit 251 transmits and receives information to and from the information processing apparatus 3 via the network NE under the control of the control unit 252.

Implemented when a controller such as a central processing unit (CPU) or a micro processing unit (MPU) executes various computer programs stored in the storage unit 253, the control unit 252 controls the operation of the entire in-vehicle terminal 2. The control unit 252 is not limited to a CPU or an MPU and may be configured of an integrated circuit such as an application specific integrated circuit (ASIC) or a field programmable gate array (FPGA).

The storage unit 253 stores various computer programs that the control unit 252 executes, data on which the control section 252 needs to perform processing, and the like.

### Configuration of information processing apparatus

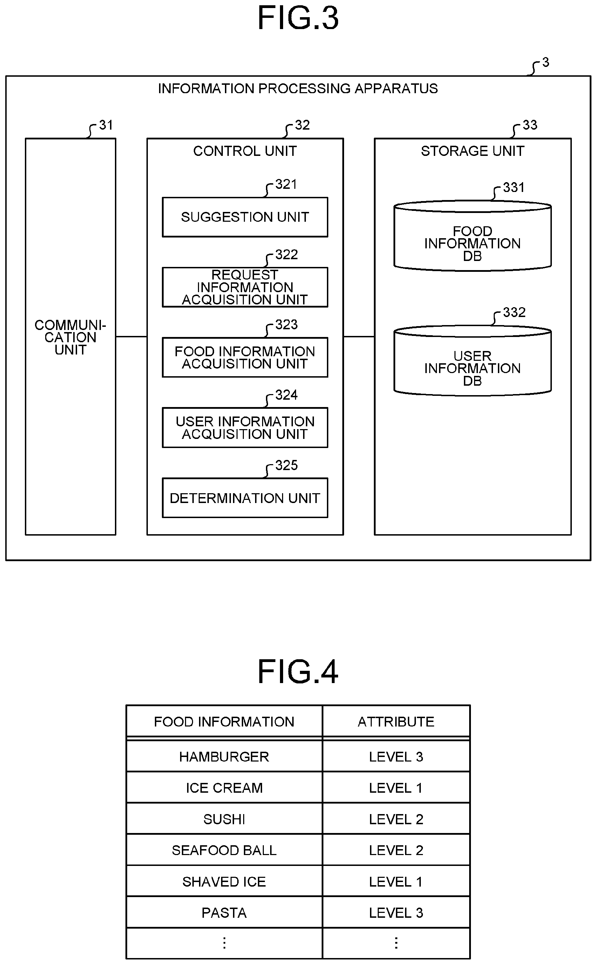

FIG. 3 is a block diagram illustrating the configuration of the information processing apparatus 3. The information processing apparatus 3 is, for example, a server apparatus. As illustrated in FIG. 3, the information processing apparatus 3 includes a communication unit 31, a control unit 32, and a storage unit 33.

The communication unit 31 transmits and receives information to and from the in-vehicle terminal 2 (the communication unit 251) via the network NE under the control of the Control unit 32.

Implemented when a controller such as a CPU or an MPU executes various computer programs (including information processing programs according to the embodiment) stored in the storage unit 33, the control unit 32 controls the entire operation of the information processing apparatus 3. The control unit 32 is not limited to a CPU or an MPU and may be configured of an integrated circuit such as an ASIC or an FPGA. As illustrated in FIG. 3, this control unit 32 includes a suggestion unit 321, a request information acquisition unit 322, a food information acquisition unit 323, a user information acquisition unit 324, and a determination unit 325.

Based on the situation of the passenger PA, the suggestion unit 321 suggests ordering food. In other words, the suggestion unit 321 determines whether the passenger PA is feeling hungry or fatigued and, when determining that the passenger PA is feeling hungry or fatigued, suggests ordering food. For example, on occasions such as when the passenger PA has been driving continuously for more than a predetermined time based on his or her activity history and when, while a route being taken is congested, the congested route has been traveled for more than a predetermined time, the suggestion unit 321 controls the speaker 221 to output a voice suggesting ordering food.

The suggestion unit 321 may, for example, acquire the captured image generated by the image capturing unit 23 from the in-vehicle terminal 2 via the communication unit 31, detect the posture of the passenger PA of the vehicle VE, and, based on the posture of the passenger PA, suggest ordering food. The posture of the passenger PA includes the posture taken unconsciously by the passenger. In this embodiment, the suggestion unit 321 detects the posture by what is called skeletal recognition, and, when determining that the passenger PA is feeling hungry or fatigued, suggests ordering food.

More specifically, the suggestion unit 321 detects the posture of the passenger PA of the vehicle VE by detecting the skeleton of the passenger PA of the vehicle VE included as a subject in the captured image by image recognition (AI-based image recognition) using a learning model described below. This learning model is a model obtained by machine learning (such as deep learning). In this machine learning, images where the positions of joint points of people have been labeled previously are used as teacher images, and the positions of joint points are learned based on the teacher images.

The request information acquisition unit 322 acquires request information input from the passenger PA of the vehicle VE, the request information requesting an order of food. In this first embodiment, the request information is voice information generated by the voice input unit 21 based on words (voice) uttered by the passenger PA of the vehicle VE and captured by the voice input unit 21. That is, the request information acquisition unit 322 acquires the request information (voice information) from the in-vehicle terminal 2 via the communication unit 31. The request information acquisition unit 322 analyzes the request information (voice information) acquired by the request information acquisition unit 322. The request information acquisition unit 322 identifies food ordered by the passenger PA by analyzing the request information, and notifies the food information acquisition unit 323 of the food thus identified. A method used for the ordering food is not limited to a method using voice.

The food information acquisition unit 323 acquires attribute information on the food ordered by the passenger PA. For example, from a food information DB 331, the food information acquisition unit 323 acquires, as the attribute information, a level set according to an acceptable length of delivery time in delivery of the food.

This is more specifically described by way of an example illustrated in FIG. 4 described further below. For example, when the passenger PA orders a "hamburger," "Level 3" is obtained from the food information DB 331 as a level that corresponds to a "hamburger" set according to an acceptable length of delivery time in delivery of the food.

The user information acquisition unit 324 acquires information on the movement of the user. For example, as the information on the movement, the user information acquisition unit 324 acquires one or more of the following kinds of information: the means of mobility of the user; the average moving speed of the user; the positional information on the user; the moving route of the user; peripheral information on the moving route of the user; and information on the destination of the user. The user information acquisition unit 324 may also acquire information specified by the user, such as whether there is a delivery point specified and whether the user desires to receive the food on the route.

In accordance with the attribute information on the food and the information on the movement, the determination unit 325 determines a location where the user is to receive the food. Specifically, based on a level set according to an acceptable length of delivery time in delivery of the food, the determination unit 325 determines, as a location where the food is received, a location that is closer to a shop providing the food as freshness that the food needs are higher. When there is a delivery point specified by the passenger PA, the delivery point specified by the passenger PA may be determined as the location.

For example, the determination unit 325 identifies the length of delivery time that corresponds to a level set according to an acceptable length of delivery time in delivery of the food. In this connection, the determination unit 325 may correct the length of delivery time by reflecting the peripheral information on the moving route of the user and weather information identified from the information on the destination of the user. Based on the identified length of delivery time and a delivery method (means of mobility), the determination unit 325 then determines a distance (range) through which delivery from a shop that delivers the food can be made. Based on the moving route of the user and the positional information on the user, the determination unit 325 also determines a distance (range) through which moving is possible within the length of delivery time. When the food needs cooking, the determination unit 325 may determine the above distances with the time for the cooking taken into account.

Based on the average moving speed of the user, the positional information on the user, the moving route of the user, and the peripheral information (such as weather and traffic congestion information) on the moving route of the user, the determination unit 325 then calculates a distance through which the user can move within the length of delivery time. The determination unit 325 then determines, as the location where the food is received, a location that is within the distances determined in relation to the shop and within the distance through which the user can move. The determination unit 325 may be configured to, when the distance (range) through which delivery from a shop delivering the food can be made is short, determine a location off from the moving route of the user as the location where the food is received while being configured to determine, as the location where the food is received, a location with preference given to a location that is on the moving route of the user. The determination unit 325 may be configured to, while determining the location from among possible delivery points on the moving route when a desire to receive the food on the route is specified by the passenger PA, determine a location off from the moving route of the user as the delivery point only when no desire to receive the food on the route is specified.

The determination unit 325 may also be configured to determine a delivery method for food in accordance with the attribute information and the information on the movement at the same time as determining the location where the food is received. For example, the determination unit 325 may also be configured to determine, based on the level set according to an acceptable length of delivery time in delivery of the food, a delivery method using means of mobility with a higher moving speed as freshness that the food needs are higher.

This is described by way of a specific example. For example, the determination unit 325 selects "motorcycle" as the delivery method when the food is one corresponding to the attribute "Level 1," such as ice cream or shaved ice. When the food is one corresponding to the attribute "Level 2," such as sushi or a seafood bowl, the determination unit 325 selects "motorcycle" or "bicycle" as the delivery method. When the food is one corresponding to the attribute "Level 3", such as a hamburger or pasta, the determination unit 325 selects "motorcycle," "bicycle," or "walking" as the delivery method. The delivery method is not limited to vehicles and the delivery may be made in an unmanned manner, for example, by drone. The determination unit 325 may use a learning model to determine the delivery point and delivery method.

The determination unit 325 then notifies the in-vehicle terminal 2 of the result of the determination. For example, the determination unit 325 notifies the in-vehicle terminal 2 of the determined delivery point and causes the display unit 27 to display the delivery point along with the moving route. The determination unit 325 may also notify the in-vehicle terminal 2 of information such as the scheduled time of delivery and the location name of the delivery point. The determination unit 325 may notify a terminal or the like of a delivery person, who works for the shop that has received the order, of the delivery point and means of delivery upon determining the delivery point and the means of delivery.

The storage unit 33 stores, as well as various computer programs (information processing programs according to the present embodiment) to be executed by the control unit 32, data and the like that are needed when the control unit 32 performs processing. As illustrated in FIG. 3, this storage unit 33 includes the food information DB 331 and a user information DB 332.

The food information DB 331 stores attribute information on food. Here, as illustrated in FIG. 4, the food information DB 333 stores levels set according to acceptable lengths of delivery time in delivery of food as "attributes" for different food items. Here, the larger value of a level set according to an acceptable length of delivery time in delivery of food means that an acceptable length of delivery time in delivery of the food is longer, and the smaller value thereof means that an acceptable length of delivery time in delivery of the food is shorter. The food information DB 331 may store not only the levels set according to acceptable lengths of delivery time in delivery of food but also other information such as caution information to observe in food delivery (such as caution with fragile items or need of freezing).

The user information DB 332 stores the aforementioned information on the movement of the user. For example, as the information on the movement of the user, the user information DB 332 stores the following: the means of mobility of the user; the average moving speed of the user; the positional information on the user; the moving route of the user; peripheral information on the moving route of the user; and information on the destination of the user.

For example, the average moving speed of the user is an average moving speed calculated from travel speeds acquired from the acceleration sensor of the in-vehicle terminal 2 via the communication unit 31. For example, the positional information on the user is positional information acquired by the GPS sensor of the in-vehicle terminal 2 via the communication unit 31. The moving route of the user is a route from the current position of the vehicle VE to the destination of the vehicle VE set by the passenger PA.

For example, the peripheral information on the moving route of the user is road traffic information, such as traffic congestion information and traffic information, acquired from Vehicle Information Communication System (VICS; Registered Trademark) Center via the communication unit 31 and is road traffic information corresponding to the current position of the vehicle VE, which is estimated from the aforementioned output data (positioning data received by a global navigation satellite system (GNSS) sensor). The peripheral information on the moving route of the user may include weather information such as weather and temperatures on the moving route. For example, the information on the destination of the user includes the location name of the destination of the vehicle VE set by the passenger PA and road traffic information and weather information on the destination.

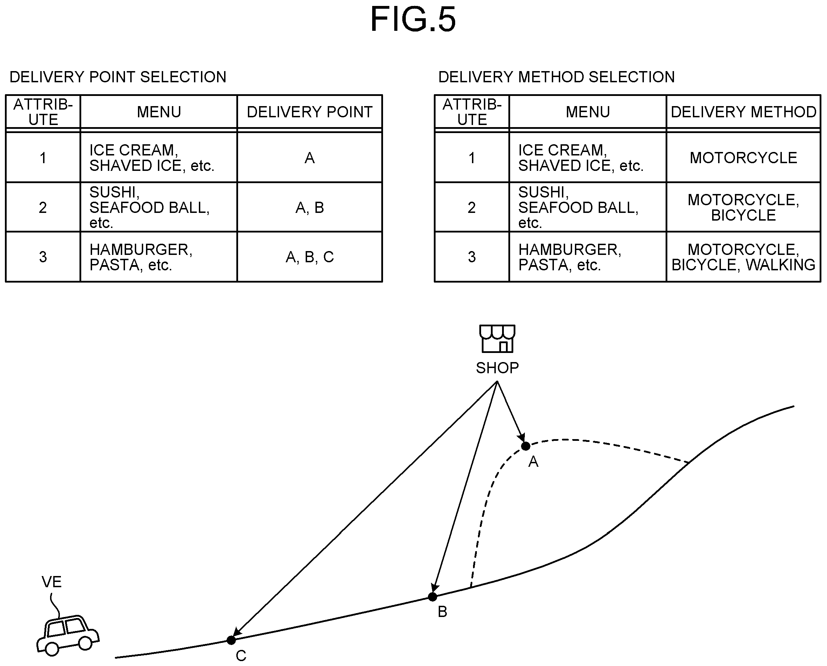

Next, an example of methods whereby the information processing apparatus 3 selects a delivery point and a delivery method is described with reference to FIG. 5. FIG. 5 illustrates processing for selecting a delivery point and a delivery method. The example in FIG. 5 is described using, as an example, a case where the vehicle VE is traveling along a predetermined moving route and the passenger PA has ordered food from a shop.

Based on the level set according to an acceptable length of delivery time in delivery of the food, an information processing apparatus 10 determines, as a location where the food is received, a location that is closer to a shop providing the food as freshness that the food needs is higher. For example, when the passenger PA has ordered food that corresponds to the attribute "Level 1" such as ice cream or shaved ice, that is, food that corresponds to a short acceptable delivery time in food delivery, the information processing apparatus 10 selects the delivery point "A", which is closer to the shop than the others. The delivery point "A" is on a detour route (dotted line in FIG. 5) that is different from the moving route of the vehicle VE. In such a case, the information processing apparatus 10 notifies the in-vehicle terminal 2 of the delivery point "A" and the detour route and causes the display unit 27 to display the delivery point and the detour route.

In addition, for example, when the passenger PA has ordered food that corresponds to the attribute "Level 1" such as ice cream or shaved ice, that is, food that corresponds to a short acceptable delivery time in food delivery, the information processing apparatus 10 selects "motorcycle", which is means of mobility with a higher moving speed than the others. For example, the information processing apparatus 10 notifies the store of the delivery point "A" and the means of mobility "motorcycle".

When the passenger PA has ordered food that corresponds to the attribute "Level 2" such as sushi or a seafood bowl, the information processing apparatus 10 selects the delivery points "A" and "B." In addition, when the passenger PA has ordered food that corresponds to the attribute "Level 2" such as sushi or a seafood bowl, the information processing apparatus 10 selects "motorcycle" or "bicycle" as the means of mobility. For such a case, the information processing apparatus 10 may be configured to prompt the shop or the passenger PA to select between, for example, delivery to the delivery point "A" with the means of mobility "bicycle" and delivery to the delivery point "B" with the means of mobility "motorcycle."

When the passenger PA has ordered food that corresponds to the attribute "Level 3" such as a hamburger or pasta, that is, food that corresponds to a relatively long acceptable delivery time in food delivery, the information processing apparatus 10 selects the delivery points "A," "B," and "C" from the shop. In addition, when the passenger PA has ordered food that corresponds to the attribute "Level 3" such as a hamburger or pasta, the information processing apparatus 10 selects "motorcycle," "bicycle," and "walking" as the means of mobility. For such a case, the information processing apparatus 10 may be configured to prompt the shop or the passenger PA to select from among, for example, delivery to the delivery point "A" with the means of mobility "walking," delivery to the delivery point "B" with the means of mobility "bicycle," and delivery to the delivery point "C" with the means of mobility "motorcycle."

Thus, the information processing apparatus 3 enables the user to order food easily while traveling, and to change delivery points and delivery methods depending on the ordered menu item. This allows the information processing apparatus 3 to maintain the quality of menu items and enable the ordered food to be received efficiently.

### Information processing method

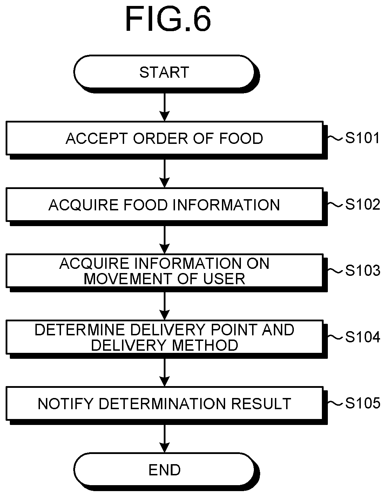

Next, an information processing method to be executed by the information processing apparatus 3 (the control unit 32) is described. FIG. 6 is a flowchart illustrating the information processing method.

At the start, the request information acquisition unit 322 of the information processing apparatus 3 receives a food order from the in-vehicle terminal 2 via the communication unit 31 (step S101). For example, the request information acquisition unit 322 acquires the request information (voice information) from the in-vehicle terminal 2 via the communication unit 31.

Then, the food information acquisition unit 323 acquires the attribute information on the food ordered by the passenger PA (step S102). For example, from the food information DB 331, the food information acquisition unit 323 acquires, as the attribute information, a level set according to an acceptable length of delivery time in delivery of the food.

The user information acquisition unit 324 then acquires information on the movement of the user (step S103). For example, as the information on the movement, the user information acquisition unit 324 acquires one or more of the following kinds of information: the means of mobility of the user; the average moving speed of the user; the positional information on the user; the moving route of the user; peripheral information on the moving route of the user; and information on the destination of the user. The user information acquisition unit 324 may also acquire information specified by the user, such as whether there is a delivery point specified and whether the food is to be received on the route.

The determination unit 325 determines a delivery point and means of delivery according to the attribute information on the food and the information on the movement (step S104). For example, while taking into account the information on the movement of the user, such as the moving route of the user, based on the level set according to an acceptable length of delivery time in delivery of the food, the determination unit 325 determines, as the delivery point, a location that is closer to a shop providing the food as freshness that the food needs is higher, and further determines means of delivery using means of mobility with a higher moving speed as freshness that the food needs is higher.

The determination unit 325 then notifies the in-vehicle terminal 2 of the result of the determination. For example, the determination unit 325 notifies the in-vehicle terminal 2 of the determined delivery point and causes the display unit 27 to display the delivery point along with the moving route. The determination unit 325 may be configured to notify a terminal or the like of the shop that has accepted the order or of a delivery person of the delivery point and the means of delivery upon determining the delivery point and the means of delivery.

Next, an example of a food order service provided by a food order agent is described using FIG. 7 by way of a specific example. FIG. 7 illustrates the information processing method. For example, the information processing apparatus 10 outputs, from the speaker 221, a voice of a food order agent saying to the passenger PA of the vehicle VE, "You are tired from traffic congestion. How about a cup of coffee, and lunch as well if you would like?" This food order agent is an application program invoked by the information processing apparatus 3 and consists of at least one application program that executes tasks (functions) to execute the food order service.

In response, the passenger PA speaks, "I want to order a hamburger," and the microphone 211 collects the voice information. The information processing apparatus 10 acquires this voice information as request information. The food order agent then displays receiving methods on the display unit 27. In this case, the food order agent displays "receive at store," "receive at drive-through," or "receive by delivery" as the receiving methods. When the passenger PA selects "receive by delivery," the information processing apparatus 10 determines a delivery point and means of delivery according to the attribute information on the food and the information on the movement of the user as described above.

The information processing apparatus 10 then outputs a voice of the agent saying "The delivery person is waiting for you past the XX intersection on XX Street at about XX time." The passenger PA then receives a hamburger from the delivery person just past the XX intersection on the route. Thus, the information processing apparatus enables the user to order food easily while traveling and is capable of suggesting ordering food with the situation of the user taken into account. The passenger PA can order and receive food without his or her own activities interrupted.

According to this first embodiment described above, the following effects are produced. The information processing apparatus 3 according to this first embodiment acquires the attribute information on food ordered by the user and information on the movement of the user. In accordance with the attribute information on the food ordered by the user and the information on the movement of the user, the information processing apparatus 3 then determines a location where the user receives the food. Therefore, according to the information processing apparatus 3, the user on the move can efficiently receive ordered food while the freshness of the food to be delivered can be properly maintained.

Additionally, in accordance with the attribute information on the food and the information on the movement of the user, the information processing apparatus 3 determines a food delivery method along with the location where the food is received. This enables the selection of a food delivery method suitable for properly maintaining the freshness of the food to be delivered.

Moreover, based on the levels set according to according to acceptable lengths of delivery time in delivery of food, the information processing apparatus 3 determines, as the location where the food is received, a location that is closer to a shop providing the food as freshness that the food needs are higher. This enables the determination of a delivery point that is more suitable in accordance with the food to be delivered.

Furthermore, based on the levels set according to acceptable lengths of delivery time in delivery of food, the information processing apparatus 3 determines the delivery method using means of mobility with a higher moving speed as freshness that the food needs are higher. This enables the determination of a delivery method that uses means of mobility that is more suitable in accordance with the food to be delivered.

### Other Embodiments

Although an embodiment for carrying out the present invention is described above, the present invention is not intended to be limited only by the aforementioned embodiment. In the aforementioned embodiment, all of the components of the information processing apparatus 3 may be included in the in-vehicle terminal 2. In this case, the in-vehicle terminal 2 corresponds to the information processing apparatus according to this embodiment. Alternatively, some of the functions of the control unit 32 in the information processing apparatus 3 may be included in the in-vehicle terminal 2. In this case, the entire information processing system 1 corresponds to the information processing apparatus according to this embodiment.

### Reference Signs List

- 3: INFORMATION PROCESSING APPARATUS
- 321: SUGGESTION UNIT
- 322: REQUEST INFORMATION ACQUISITION UNIT
- 323: FOOD INFORMATION ACQUISITION UNIT
- 324: USER INFORMATION ACQUISITION UNIT
- 325: DETERMINATION UNIT

## Claims

1. An information processing apparatus comprising:
a food information acquisition unit configured to acquire attribute information on food ordered by a user;
a user information acquisition unit configured to acquire information on movement of the user; and
a determination unit configured to, in accordance with the attribute information and the information on the movement, determine a location where the food is received by the user.

2. The information processing apparatus according to claim 1, wherein, in accordance with the attribute information and the information on the movement, the determination unit determines a delivery method of the food in addition to the location where the food is received.

3. The information processing apparatus according to claim 1, wherein the user information acquisition unit acquires, as the information on the movement, one or more kinds of information from among means of mobility of the user, an average moving speed of the user, positional information on the user, a moving route of the user, peripheral information on the moving route of the user, and information on a destination of the user.

4. The information processing apparatus according to claim 1, wherein
the food information acquisition unit acquires, as the attribute information, a level set according to an acceptable length of delivery time in delivery of the food, and
based on the level set according to the acceptable length of delivery time in delivery of the food, the determination unit determines, as the location where the food is received, a location that is closer to a shop providing the food as freshness that the food needs is higher.

5. The information processing apparatus according to claim 2, wherein
the food information acquisition unit quires, as the attribute information, a level set according to an acceptable length of delivery time in delivery of the food, and
based on the level set according to the acceptable length of delivery time in delivery of the food, the determination unit determines a delivery method that uses means of mobility with a faster moving speed as freshness that the food needs is higher.

6. An information processing method to be executed by an information processing apparatus, the information processing method comprising:
a food information acquiring step of acquiring attribute information on food ordered by a user;
a user information acquiring step of acquiring information on movement of the user; and
a determining step of determining, in accordance with the attribute information and the information on the movement, a location where the user receives the food.

7. An information processing program to cause a computer to execute:
a food information acquiring step of acquiring attribute information on food ordered by a user;
a user information acquiring step of acquiring information on movement of the user; and
a determining step of determining, in accordance with the attribute information and the information on the movement, a location where the user receives the food.

8. A storage medium in which an information processing program has been stored, the information processing program causing a computer to execute:
a food information acquiring step of acquiring attribute information on food ordered by a user;
a user information acquiring step of acquiring information on movement of the user; and
a determining step of determining, in accordance with the attribute information and the information on the movement, a location where the user receives the food.
